# EUROPEAN PATENT SPECIFICATION

(11) **EP 2 447 571 B1**
(45) Date of publication and mention of the grant of the patent: **27.03.2013**
(21) Application number: 11187227.1
(22) Date of filing: 31.10.2011
(51) Int. Cl.: F16H 3/089, F16H 37/04, B60W 20/00, B60W 10/10, B60K 6/365, B60K 6/48, B60K 6/547

(54) **Tranmission for hybrid vehicle**
Getriebe für ein Hybridfahrzeug
Transmission pour véhicule hybride

(30) Priority: 02.11.2010 JP 2010245872
(43) Date of publication of application: 02.05.2012
(73) Proprietor: Aisin Seiki Kabushiki Kaisha, Aichi 448-8650 (JP)
(72) Inventor: MISU, Takahiro, Kariya-shi, Aichi 448-8650 (JP); TOJIMA, Yuki, Kariya-shi, Aichi 448-8650 (JP)
(74) Representative: TBK

(56) References cited:
- JP-A- 11 141 665
- JP-A- 2002 114 063
- KR-A- 20080 035 765
- US-A1- 2009 149 294

## Description

### TECHNICAL FIELD

This disclosure generally relates to a transmission for a hybrid vehicle. More particularly, the disclosure pertains to a transmission for a hybrid vehicle including an internal combustion engine and an electric motor each serving as a driving source.

### BACKGROUND DISCUSSION

A known hybrid vehicle includes, for example, a gasoline engine and an electric motor each serving as a driving source. Then, driving forces output from the driving sources are transmitted to drive wheels via a transmission. The transmission for the hybrid vehicle combines the driving forces output from the different driving sources (i.e., the gasoline engine and the electric motor) and then changes a rotational speed of an input shaft of the transmission so that the resulting rotation (rotational speed) is transmitted to an output shaft of the transmission. Such transmission is known to have a gear change mechanism which includes plural gear sets and of which a clutch operation is automatically performed by a control unit of the vehicle. According to a gear change operation in the gear change mechanism, the transmission of the driving force output from the driving source may be cutoff because the gear change operation is performed with a clutch of the transmission in a disengaged state, which may lead to a decrease of a driving performance of the vehicle, for example. Therefore, JP11-141665A (hereinafter referred to as Reference 1) discloses a transmission according to the preamble of claim 1 wherein the driving force is assisted by an electric motor during the gear change operation so as to decrease the cutoff of the driving force. In addition, JP2002-114063A (hereinafter referred to as Reference 2) discloses a transmission in which a one-way clutch is provided at a gear change mechanism so as to smoothly shift a gear change state and to decrease the cutoff of the driving force.

According to the transmission disclosed in Reference 1, in view of a configuration thereof, the electric motor is provided at a gear set specified to be a predetermined gear ratio. In addition, the electric motor generally includes output characteristics where a generating torque decreases in association with an increase of a rotational speed of the electric motor. Therefore, according to the transmission disclosed in Reference 1, it is difficult to effectively assist the driving force by the electric motor over a full rotational range thereof from a low rotational speed to a high rotational speed. Further, the hybrid vehicle is operated to appropriately control the transmission so that the driving by at least one of the gasoline engine and the electric motor as the driving source, a regeneration using rotations of the drive wheels, and the like are available. Accordingly, an increase of a design flexibility of the gear ratio so as to increase the driving performance of the vehicle and to achieve an effective operation at each rotational range of the electric motor may be necessary for the transmission for the hybrid vehicle.

A need thus exists for a transmission for a hybrid vehicle that reduces a cutoff of a driving force in any switching between gear speeds in a gear change mechanism and that increases a driving performance of the vehicle.

### SUMMARY

According to an aspect of this disclosure, a transmission for a hybrid vehicle including an internal combustion engine and an electric motor each serving as a driving source, the transmission includes a single planetary gear including a first element connected to an output shaft of the internal combustion engine, a second element of which a rotation is allowed and prohibited by engagement and disengagement of a brake, and a third element being connectable and disconnectable relative to the first element by engagement and disengagement of a clutch, and a gear change mechanism including an input shaft connected to the third element, an output shaft connected to drive wheels of the hybrid vehicle and plural gear sets configured to change a rotational speed of the input shaft and to transmit the rotational speed to the output shaft, the plural gear sets including a minimum reduction ratio gear set specified to be a minimum reduction gear ratio among the plural gear sets, the minimum reduction ratio gear set including gears supported by the input shaft and the output shaft respectively so as to be engageable and disengageable, one of the gears of the minimum reduction ratio gear set being connected to the electric motor.

The transmission of the hybrid vehicle includes the single planetary gear changing or switching the rotational speed of the internal combustion engine to two speeds by operations of the first to third elements and the gear change mechanism having the plural gear sets. The minimum reduction ratio gear set includes the gears supported by the input shaft and the output shaft respectively in engageable and disengageable manner and one of the gears is connected to the electric motor. Accordingly, the transmission is switchable from a state where the driving force of the internal combustion engine is transmitted to the drive wheels at one of the speeds to a state where the driving force is transmitted to the drive wheels at the other of the speeds without the cutoff of the transmission of the driving force while the single planetary gear is switched from a state where one of the speeds is obtained to a state where the other of the speeds is obtained without the cutoff of the transmission of the driving force because of the smooth engagement and disengagement of the clutch and the brake.

In addition, the hybrid vehicle is driven in such a manner that the gear change mechanism changes the rotational speed of the input shaft and transmits the resulting changed speed to the output shaft so that the speed of rotations transmitted from the internal combustion engine to the drive wheels are changed. In the aforementioned driving of the hybrid vehicle, the gears of the minimum reduction ratio gear set in the transmission selectively engage or disengage relative to the input shaft and the output shaft so that the driving force of the electric motor is directly transmitted to the output shaft. Accordingly, in the entire speed change among plural forward gear speeds, the cutoff of the driving force that may occur when the gear change mechanism performs the speed change operation is reduced in the transmission. The number of gear speeds of the transmission is obtained by multiplying the number of gear speeds of the single planetary gear with the number of gear speeds of the gear change mechanism. Thus, according to the transmission of the disclosure, a design flexibility of the gear ratio is improved. The engine, the electric motor, and the drive wheels are selectively connected and disconnected so that the start of the engine and the assist of the driving force of the engine by the electric motor, the driving and the regeneration of the electric motor are effectively conducted. According to the transmission of the disclosure, the cutoff of the transmission of the driving force when the transmission performs the gear change operation is reduced to thereby enhance a driving performance of the hybrid vehicle.

The single planetary gear and the gear change mechanism establish a plurality of forward gear speeds, in which a switching from a first gear speed to a second gear speed is performed by a speed change operation of the single planetary gear based on the engagement and disengagement of each of the brake and the clutch, and wherein the gears of the minimum reduction ratio gear set selectively engage and disengage relative to the input shaft and the output shaft so that a driving force of the electric motor is transmitted to the output shaft via the gear set for the first gear speed in a case where the hybrid vehicle is driven at the first gear speed, and so that the driving force of the electric motor is transmitted to the output shaft in a case where an establishment of the second gear speed is confirmed.

The switching between the first gear speed and the second gear speed is achieved by the switching of the speed change state of the single planetary gear that is obtained by the smooth engagement and disengagement of each of the clutch and the brake. At this time, the gears of the minimum reduction ratio gear set selectively engage and disengage relative to the input shaft and the output shaft so that the driving force of the electric motor is transmitted to the output shaft by means of the input shaft and the gear set for the first gear speed. As a result, the hybrid vehicle appropriately starts moving at the first gear speed while the driving force (the rotational speed) of the electric motor is reduced and transmitted to the drive wheels. Then, the gear speed is smoothly shifted to the second gear speed without the cutoff of the transmission of the driving force. Once the establishment of the second gear speed is confirmed, the driving force of the electric motor is directly transmitted to the output shaft. Thus, the cutoff of the transmission of the driving force that may occur when the shifting to the third gear speed or greater is performed at the gear change mechanism is securely reduced.

The first element is either one of a sun gear, a ring gear, and a carrier of the single planetary gear, the second element is either one of the sun gear and the ring gear not specified to be the first element, and the third element is either one of the sun gear, the ring gear, and the carrier not specified to be the first element or the second element.

Accordingly, the transmission of the hybrid vehicle achieves the great number of gear speeds and includes a simple structure where the cutoff of the transmission of the driving force is reduced.

The first element is one of the sun gear and the ring gear, the second element is the other of the sun gear and the ring gear, and the third element is the carrier.

Accordingly, the rotational speed of the electric motor is lower than the rotational speed of the internal combustion engine, thereby restraining an excessive rotation of the electric motor.

The first element is the sun gear, the second element is the ring gear, and the third element is the carrier.

Accordingly, the reduction ratio of the single planetary gear is relatively enlarged, which may lead to the plural gear ranges each having an appropriate gear ratio. A design flexibility of the gear ratio is therefore improved.

The clutch is a dry clutch.

Because an outer periphery of the clutch is open, the clutch is effectively cooled by air, thereby achieving a low-cost dry clutch relative to a wet clutch.

The gear change mechanism includes two or three of the gear sets changing the rotational speed of the input shaft to be transmitted to the output shaft at two forward gear speeds or three forward gear speeds, the minimum reduction ratio gear set in the two gear sets or the three gear sets is arranged to be furthest away from the internal combustion engine in an axial direction of the input shaft.

Accordingly the engine and the electric motor each of which is a relatively large unit In the hybrid vehicle are arranged to be away from each other. Thus, the mounting ability of the driving sources and the transmission in the hybrid vehicle is improved. In addition, the two gear sets or three gear sets are arranged side by side in the axial direction of the gear change mechanism. Thus, as compared to a known hybrid vehicle including a gear change mechanism having six gear sets, a length in the axial direction is reduced. The transmission as a whole is downsized in the hybrid vehicle and the hybrid vehicle equipped with the transmission is light-weighted accordingly.

The plural gear sets include the gear set for a reverse driving having gears, and a gear range for the reverse driving in the gear change mechanism is obtained by a gear train for the reverse driving in which the gears of the gear set for the reverse driving are supported by the input shaft and the output shaft respectively, and the gear set for the reverse driving is configured to be meshed with a counter gear, the gear train for the reverse driving being engageable and disengageable relative to at least one of the input shaft and the output shaft.

Accordingly, the transmission is controlled in such a manner that the hybrid vehicle is driven rearward by the driving force output from the internal combustion engine. Therefore, regardless of the remaining amount of battery power for operating the electric motor, the vehicle is securely driven rearward.

A reverse gear speed is obtained by a reverse rotation of the electric motor and the minimum reduction ratio gear set.

Accordingly, the minimum reduction ratio gear set connected to the electric motor is used for both the forward and rearward gear ranges. The hybrid vehicle is driven rearward without the gear range (the gear set) for the reverse driving in the gear change mechanism. The number of components of the transmission of the hybrid vehicle as a whole is reduced accordingly.

The electric motor is arranged so that a rotational axis of the electric motor is parallel to the output shaft of the gear change mechanism and is arranged between the internal combustion engine and the minimum reduction ratio gear set in an axial direction of the output shaft.

Accordingly, the axial length of the transmission including the electric motor is securely reduced. The mounting ability of the driving sources and the transmission in the hybrid vehicle is improved.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is skeleton view illustrating an entire structure of a transmission for a hybrid vehicle according to a first embodiment disclosed here;

Fig. 2 is a schematic view illustrating a main portion of a single planetary gear of the transmission illustrated in Fig. 1;

Fig. 3 is a graph illustrating a relationship between members of the single planetary gear and the number of rotations according to the first embodiment;

Fig. 4 is a table illustrating representative patterns of a gear change operation at the transmission according to the first embodiment;

Fig. 5 is a diagram illustrating a transmission state of a driving force at the transmission at a start of the vehicle according to the first embodiment;

Fig. 6 is a diagram illustrating the transmission state of the driving force at the transmission after a start of an engine according to the first embodiment;

Fig. 7 is a diagram illustrating the transmission state of the driving force at the transmission after a second gear speed is established according to the first embodiment;

Fig. 8 is a diagram illustrating the transmission state of the driving force at the transmission when a third gear speed is obtained according to the first embodiment;

Fig. 9 is a schematic view illustrating the main portion of the single planetary gear of the transmission according to a modification of the first embodiment;

Fig. 10 is a skeleton view illustrating an entire structure of a transmission according to a second embodiment disclosed here;

Fig. 11 is a schematic view illustrating the main portion of the single planetary gear of the transmission illustrated in Fig. 10;

Fig. 12 is a graph illustrating a relationship between members of the single planetary gear and the number of rotations according to the second embodiment;

Fig. 13 is a schematic view illustrating the main portion of the single planetary gear of the transmission according to a modification of the second embodiment;

Fig. 14 is a schematic view illustrating the main portion of the single planetary gear of the transmission according to another modification of the first and second embodiments;

Fig. 15 is a graph illustrating a relationship between the members of the single planetary gear and the number of rotations according to still another modification of the first and second embodiments;

Fig. 16 is a schematic view illustrating the main portion of the single planetary gear of the transmission according to still another modification of the first and second embodiments; and

Fig. 17 is a graph illustrating a relationship between the members of the single planetary gear and the number of rotations according to still another modification of the first and second embodiments.

### DETAILED DESCRIPTION

Embodiments will be explained with reference to the attached drawings. In an explanation, a vehicle at which a drive unit of each of the embodiments is mounted is a hybrid vehicle including an internal combustion engine and an electric motor each serving as a power source.

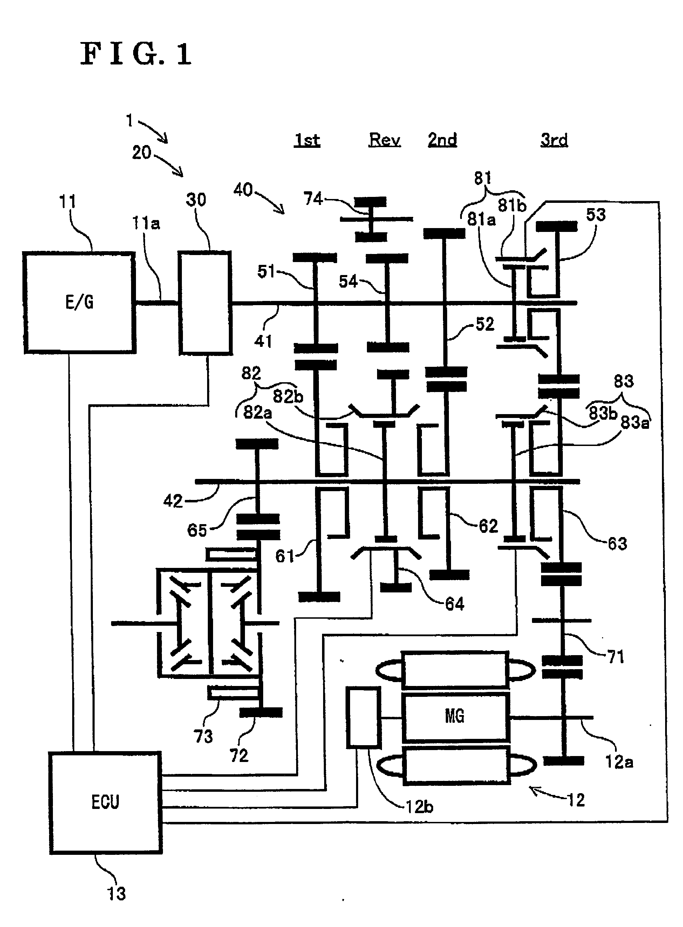

[First Embodiment]
A transmission 20 for a hybrid vehicle 1 according to the present embodiment will be explained with reference to Figs. 1 to 3. The hybrid vehicle 1 includes an engine 11, an electric motor 12, a control unit 13, and the transmission 20. The engine 11 serves as an internal combustion engine such as a gasoline engine and a diesel engine generating a driving force by combusting a fuel. The driving force of the engine 11 is transmitted and input to the transmission 20 via a crankshaft 11a serving as an output shaft of the engine 11. In addition, an opening of a throttle valve, a fuel injection level, an ignition timing, and the like of the engine 11 are controlled by the control unit 13.

The electric motor 12 is supplied with an electric power by a battery connected to the electric motor 12 via an inverter 12b. The electric motor 12 serves as a rotary electric machine generating a driving force. The driving force of the electric motor 12 is transmitted and input to the transmission 20 via a rotational shaft 12a of the electric motor 12. A state of the electric motor 12 is appropriately changed by the inverter 12b that receives a control signal from the control unit 13. That is, the electric motor 12 is controlled by the control unit 13 so as to be brought into a driving state to generate the driving force and a regeneration state to generate the electric power by means of rotations transmitted from drive wheels of the hybrid vehicle 1.

The control unit 13 is an electronic control unit mainly constituted by a microcomputer. The control unit 13 receives vehicle information such as a vehicle speed and a shift position by various sensors. The control unit 13 performs a hybrid control by appropriately choosing outputs of the driving forces of the engine 11 and the electric motor 12 based on the vehicle information received from the sensors. Accordingly, a driving mode of the hybrid vehicle 1 is switchable between an HV driving mode where the engine 11 and the electric motor 12 both serve as driving sources, an EG driving mode where only the engine 11 serves as the driving source, and an EV driving mode where only the electric motor 12 serves as the driving source. The control unit 13 controls the number of rotations (i.e., a rotational speed) of each of the engine 11 and the electric motor 12 based on the detected rotational speed of the engine 11, the electric motor 12, an acceleration operation of a driver of the vehicle, and the like.

The control unit 13 controls in such a manner that a gear speed range of the transmission 20 is changed on a basis of the vehicle speed, the opening of the throttle valve by the acceleration operation, the shift position, and the like. In addition, the control unit 13 controls a parking device and performs an ABS control, for example. The parking device inhibits a rotation of a parking gear 73 fixed to a final gear 72 so as to prohibit a rotation of a rotational shaft of the final gear 72 of a differential mechanism when the vehicle is parked. The ABS control is an antilock brake system control preventing a locking of the drive wheels during a braking of the hybrid vehicle 1.

The transmission 20 transmits the driving force output from each of the engine 11 and the electric motor 12 serving as the driving source to the drive wheels based on the control signal from the control unit 13, for example. As illustrated in Fig. 1, the transmission 20 includes a single planetary gear 30 and a gear change mechanism 40. According to the present embodiment, a two-speed change is performed (i.e., two gear speeds are obtained) by the single planetary gear 30 while a three-speed change is performed (i.e., three gear speeds are obtained) by the gear change mechanism 40 so that a six forward speed change is performed (i.e., six forward gear speeds are obtained) in total.

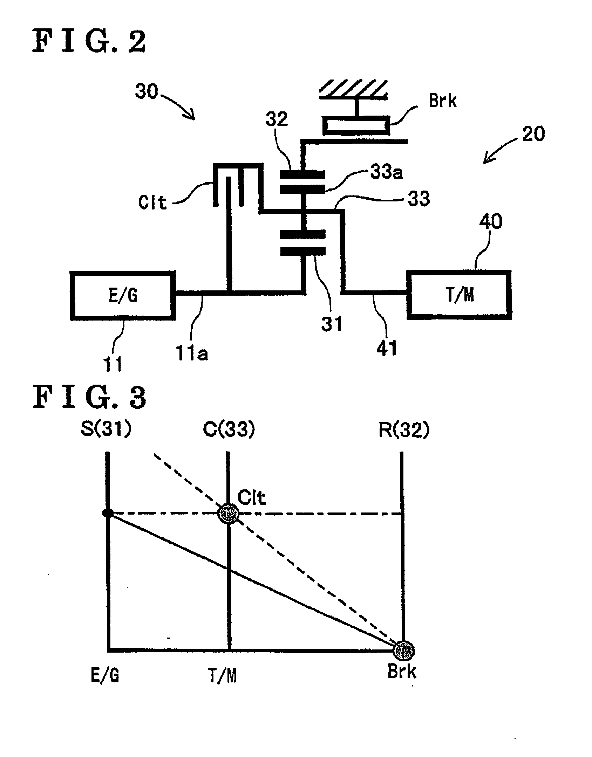

As illustrated in Fig. 2, the single planetary gear 30 has a planetary gear mechanism including a sun gear 31, a ring gear 32, and a carrier 33. The single planetary gear 30 allows or prohibits a transmission of the driving force of the engine 11 to an input shaft 41 and selectively chooses one of the two gear speeds in a state where the control unit 13 controls an engagement state and a disengagement state of each of a brake Brk and a clutch Clt of the single planetary gear 30. In addition, according to the present embodiment, the clutch Clt is a dry type clutch arranged at the single planetary gear 30 in such a manner that an outer peripheral side of the clutch Clt is in an open state.

The sun gear 31 is substantially positioned at a center of the single planetary gear 30. The sun gear 31 is an external gear rotatably and coaxially supported relative to a rotational shaft of the crankshaft 11a. The ring gear 32 is rotatably supported by a housing of the single planetary gear 30. The ring gear 32 is an internal gear coaxially arranged relative to the sun gear 31. The carrier 33 is rotatably and coaxially supported relative to the sun gear 31. The carrier 33 rotatably supports plural pinion gears 33a. Each of the pinion gears 33a engages with the sun gear 31 and the ring gear 32 and rotates around the sun gear 31 while rotating on its own.

According to the present embodiment, the sung gear 31 is connected to the crankshaft 11a of the engine 11 so as to serve as a first element The rotation of the ring gear 32 Is allowed and prohibited by the engagement and disengagement of the brake Brk. The ring gear 32 serves as a second element. The carrier 33 is connectable and disconnectable relative to the sun gear 31 serving as the first element based on the engagement and disengagement of the clutch Clt. The carrier 33 serves as a third element. The carrier 33 is connected to the input shaft 41 of the gear change mechanism 40.

The single planetary gear 30 performs a speed change operation at a predetermined gear ratio based on differences of the number of gears among the gears 31, 32, and 33a. For example, the brake Brk is brought into the engagement state so as to inhibit the rotation of the ring gear 32 and the clutch Clt is brought into the disengagement state. Then, the driving force of the engine 11 is transmitted from the sun gear 31 to the carrier 33 via the pinion gears 33a. That is, as illustrated by a solid line in Fig. 3, the single planetary gear 30 reduces the rotational speed of the engine 11 and transmits the reduced rotational speed to the gear change mechanism 40. On the other hand, the brake Brk is brought into the disengagement state so as to allow the rotation of the ring gear 32, and the clutch Clt is brought into the engagement state so as to connect the sun gear 31 and the carrier 33 to each other. As a result, the driving force of the engine 11 is directly transmitted from the crankshaft 11a to the carrier 33. That is, as illustrated by a long dashed and short dashed line in Fig. 3, the number of rotations (i.e., the rotational speed) of the engine 11 is fully transmitted to the gear change mechanism 40.

The gear change mechanism 40 includes the input shaft 41 connected to the carrier 33 serving as the third element of the single planetary gear 30, an output shaft 42 connected to the drive wheels of the hybrid vehicle 1, and plural gear sets changing the rotational speed of the input shaft 41 and transmitting the resulting rotational speed to the output shaft 42. According to the present embodiment, the gear change mechanism 40 includes three gear sets for transmitting the rotational speed of the input shaft 41 to the output shaft 42 at three forward gear speeds and one gear set for a reverse driving.

The input shaft 41 formed into a shaft shape is rotatably supported by a transmission case. As illustrated in Fig. 1, input gears 51, 52, 53 for the respective gear speeds, and an input gear for the reverse driving (a reverse input gear 54) are arranged axially along the input shaft 41. Specifically, the input gear for the first gear speed (i.e., the first input gear) 51, the input gear for the second gear speed (i.e., the second input gear) 52, and the reverse input gear 54 are integrally fixed to an outer peripheral surface of the input shaft 41. Further, the input gear for the third gear speed (i.e., the third input gear) 53 is movably supported by the input shaft 41 via a bearing member such as a needle bearing. The third input gear 53 is engageable and disengageable relative to the input shaft 41 by means of a first synchronizer mechanism 81 which will be explained later. The input shaft 41 is connected to the crankshaft 11 a of the engine 11 via the single planetary gear 30 so as to input or receive the driving force of the engine 11.

The output shaft 42 is formed into a shaft shape and is rotatably supported by the transmission case. As illustrated in Fig. 1, output gears 61 to 63 for the respective gear speeds, an output gear for the reverse driving (a reverse output gear 64), and a final output gear 65 are arranged axially along the output shaft 42. Specifically, the output gear for the first gear speed (i.e., the first output gear) 61, the output gear for the second gear speed (i.e., the second output gear) 62, and the output gear for the third gear speed (i.e., the third output gear) 63 are movably supported by the output shaft 42 via the bearing member such as the needle bearing. The reverse output gear 64 is formed at an outer peripheral surface of a second shift gear 82b of a second synchronizer mechanism 82 which will be explained later. The final output gear 65 is meshed with the final gear 72 of the differential so as to output the reduced rotational speed to the outside of the gear change mechanism 40.

The gear change mechanism 40 includes the aforementioned first to third input gears 51 to 53 and the first to third output gears 61 to 63 for the respective gear speeds, the reverse input gear 54, and the reverse output gear 64. That is, the gear change mechanism 40 includes the four gear sets. The first to third input gears 51 to 53 are constantly meshed with the first to third output gear 61 to 63 respectively. Among the four gear sets of the gear change mechanism 40, the third input gear 53 and the third output gear 63 constituting the third gear set are arranged so as to be furthest away from the engine 11 in an axial direction of the input shaft 41 (i.e., a right and left direction in Fig. 1 serving as an input shaft direction) as illustrated in Fig. 1. In addition, the third gear set is specified to be a minimum reduction gear ratio in the gear change mechanism 40 and is the maximum gear speed (the third gear speed). The gear set constituted by the third input gear 53 and the third output gear 63 for the third gear speed serves as a minimum reduction ratio gear set.

The gear change mechanism 40 further includes the first synchronizer mechanism 81 provided at the input shaft 41, the second synchronizer mechanism 82 provided at the output shaft 42, and the third synchronizer mechanism 83 provided at the output shaft 42. The first synchronizer mechanism 81 synchronizes the rotation of the input shaft 41 where the first synchronizer mechanism 81 is provided with the rotation of the third input gear 53 movably provided at the input shaft 41 to thereby connect the input shaft 41 to the third input gear 53. In addition, the second synchronizer mechanism 82 synchronizes the rotation of the output shaft 42 where the second synchronizer mechanism 82 is provided with the rotation of the first output gear 61 or the second output gear 62 movably provided at the output shaft 42 to thereby connect the output shaft 42 to the first output gear 61 or the second output gear 62. Further, the third synchronizer mechanism 83 synchronizes the rotation of the output shaft 42 where the third synchronizer mechanism 83 is provided with the rotation of the third output gear 63 movably provided at the output shaft 42 to thereby connect the output shaft 42 to the third output gear 63. The first synchronizer mechanism 81 includes a first connection gear 81a integrally attached to the input shaft 41 and a first shift gear 81b meshed with the first connection gear 81a so as to be movable relative thereto in the axial direction of the input shaft 41. The first connection gear 81a is selectively meshed with a synchronizer gear portion of the third input gear 53 while the first shift gear 81 b is shifted in the axial direction of the input shaft 41 (the left and right direction in Fig. 1). Because of such operation of the first synchronizer mechanism 81, the third input gear 53 is switchable between a connected state and a disconnected state relative to the input shaft 41.

In the same manner, the second synchronizer mechanism 82 includes a second connection gear 82a and the second shift gear 82b while the third synchronizer mechanism 83 includes a third connection gear 83a and a third shift gear 83b. The second synchronizer mechanism 82 brings the first output gear 61 or the second output gear 62 to be selectively connectable relative to the output shaft 42 while moving the second shift gear 82b in the axial direction of the output shaft 42. Because of such operation of the second synchronizer mechanism 82, each of the first output gear 61 and the second output gear 62 is switchable between a connected state and a disconnected state relative to the output shaft 42. In addition, the third synchronizer mechanism 83 brings the third output gear 63 to be selectively connectable relative to the output shaft 42 while moving the third shift gear 83b in the axial direction of the output shaft 42. Because of such operation of the third synchronizer mechanism 83, the third output gear 63 is switchable between a connected state and a disconnected state relative to the output shaft 42.

The gear change mechanism 40 also includes a reverse gear train in which the reverse input gear 54 and the reverse output gear 64 forming a reverse gear set are meshed with a counter gear 74. In addition, as described above, the reverse output gear 64 is formed at the outer peripheral surface of the second shift gear 82b of the second synchronizer mechanism 82. Accordingly, the reverse gear train is substantially engageable and disengageable relative to the output shaft 42. According to the aforementioned reverse gear train, in a case where the shift position is specified in a reverse range, the counter gear 74 moves to the input shaft 41 so as to be meshed with the reverse gear set. Thus, the rotational speed of the input shaft 41 is changed by the reverse gear train. In addition, the rotation of the input shaft 41 is reversed by the counter gear 74 and the resulting rotation is transmitted to the output shaft 42.

The transmission 20 is configured so that the output shaft 42 is arranged in parallel to the rotational shaft 12a of the electric motor 12. In addition, the electric motor 12 is arranged between the engine 11 and the minimum reduction ratio gear set (the gear set achieving the third gear speed) in the axial direction of the input shaft 41. That is, the electric motor 12 is arranged at a side closer to the engine 11 in the left and right direction in Fig. 1 relative to the third output gear 63 connected to the electric motor 12 via an intermediate gear 71.

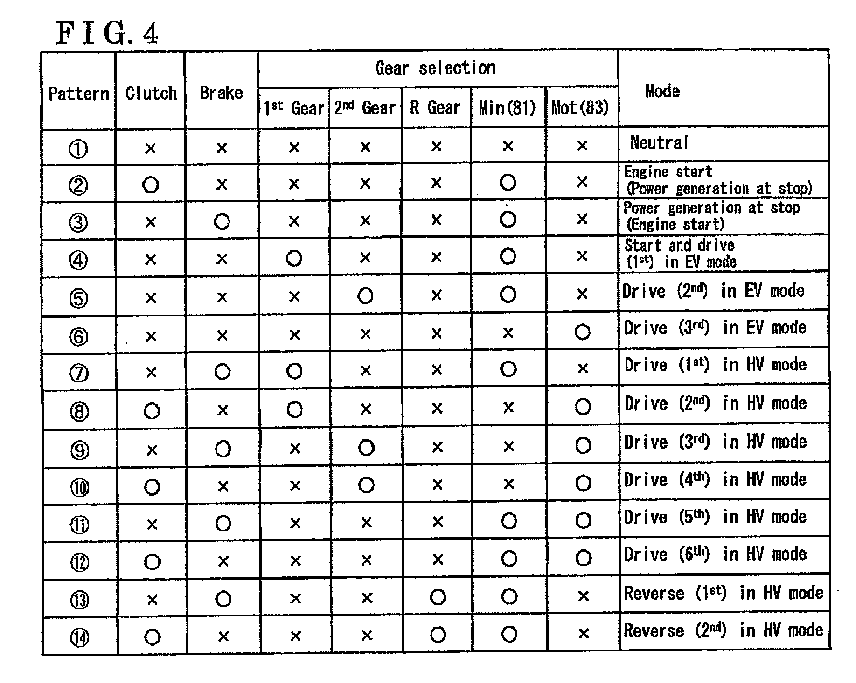

An operation of the transmission 20 in a case where the hybrid vehicle 1 is driven will be explained with reference to Figs. 4 to 8. According to the transmission 20 of the present embodiment, the single planetary gear 30 performs the two-speed change (i.e., Low and High speeds) while the gear change mechanism 40 performs the three-speed change (i.e., first, second, and third gear speeds). As a result, the six forward speed change (the first to sixth gear speeds) as a whole is achievable. Further, in a case of achieving the reverse driving, two reverse gear speeds are achievable as a whole by the speed change operation of the single planetary gear 30. The six forward gear speeds and the two reverse gear speeds are switchable and selectable by each of the brake Brk and the clutch Clt of the single planetary gear 30 brought into the engagement state or the disengagement state, and each of the first to third synchronizer mechanisms 81 to 83 of the gear change mechanism 40 brought into the connected state or the disconnected state relative to the corresponding input shaft 41 or the output shaft 42.

According to the six forward speed change obtained by the single planetary gear 30 and the gear change mechanism 40, the change between the first gear speed and the second gear speed is performed by the speed change operation of the single planetary gear 30 based on the engagement and disengagement of each of the brake Brk and the clutch Clt. Specifically, in a case where the first gear speed is obtained by the transmission 20, the rotation of the ring gear 32 is restricted by the brake Brk in the engagement state and the clutch Clt is brought into the disengagement state as illustrated by Pattern 7 in Fig. 4. In a case where the second gear speed is obtained by the transmission 20, the brake Brk is brought into the disengagement state so as to allow the rotation of the ring gear 32, and the sun gear 31 and the carrier 33 are connected to each other by the clutch Clt in the engagement state as illustrated by Pattern 8 in Fig. 4.

In the shifting between the first gear speed and the second gear speed, the relationship of the engagement and disengagement of the first synchronizer mechanism 81 and the third synchronizer mechanism 83 is reversed. This is to decrease a cutoff of transmission of the driving force that may occur when the shifting to the third gear speed or greater is performed by the gear change mechanism 40. In addition, the driving force of the engine 11 is transmitted to the output shaft 42 in a state where both the synchronizer mechanisms 81 and 83 are connected to the corresponding shafts, i.e., the input shaft 41 and the output shaft 42. Thus, the exchange of the engagement state and the disengagement state between the brake Brk and the clutch Clt is irrelevant to the shifting between the first gear speed and the second gear speed in the transmission 20.

As illustrated in Fig. 4, the hybrid vehicle 1 is driven in the EG driving mode in which only the engine 11 serves as the driving source, in addition to the HV driving mode in which the engine 11 and the electric motor 12 both serve as the driving sources. Further, the hybrid vehicle 1 is driven in the EV driving mode (Patterns 4 to 6 in Fig. 4) in which the engine 11 is stopped and only the electric motor 12 serves as the driving source. In the EV driving mode, each of the brake Brk and the clutch Clt is in the disengagement state so that the engine 11 that is stopped is inhibited from being connected to the input shaft 41.

In the hybrid vehicle 1, the various driving modes are selectively obtained by the transmission 20. Further, the driving force of the electric motor 12 is selectively combined with the driving force of the engine 11 at either of the input shaft 41 or the output shaft 42. In addition, the electric motor 12 is controlled by the control unit 13 so as to be switchable between the driving state where the electric motor 12 generates the driving force and the regeneration state where the electric motor 12 generates the electric power by the rotational force transmitted by the drive wheels of the hybrid vehicle 1 to thereby charge the battery, for example.

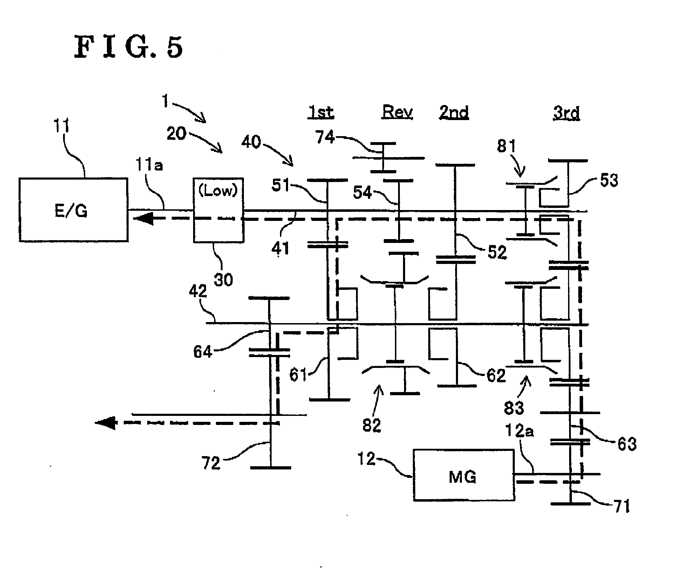

In a case where the hybrid vehicle 1 starts moving while the engine 11 is stopped, the engagement/disengagement state of each member is controlled as illustrated by Pattern 4 in Fig. 4. As a result, the driving force of the electric motor 12 is transmitted to the output shaft 42 via the first gear set (the first input gear 51 and the first output gear 61) at the first gear speed. In order to start the engine 11 when the hybrid vehicle 1 is in the EV driving mode at the first gear speed, the brake Brk is brought into the engagement state from the disengagement state so as to inhibit the ring gear 32 from rotating as illustrated by Pattern 7 in Fig. 4. Then, the single planetary gear 30 is brought into the Low state. As illustrated in Fig. 5, the driving force of the electric motor 12 is transmitted to the engine 11 so as to substitute a starter, thereby rotating the crankshaft 11a and starting the engine 11. Accordingly, the driving forces of the engine 11 and the electric motor 12 are both transmitted to the drive wheels to thereby obtain the HV driving mode of the hybrid vehicle 1.

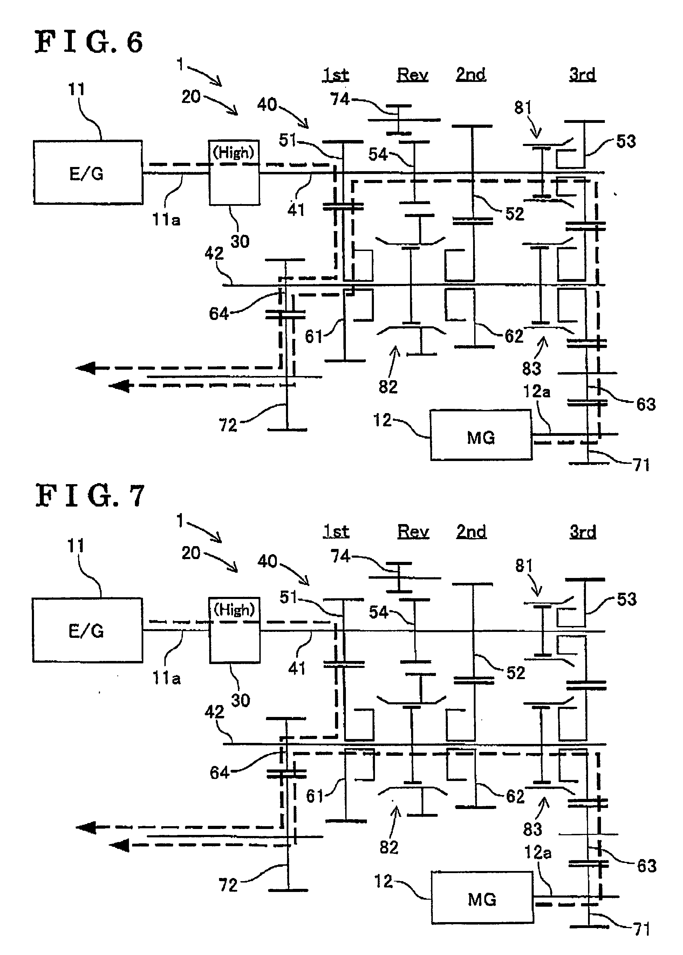

In a case where the hybrid vehicle 1 is shifted from the first gear speed to the second gear speed, the brake Brk is brought into the disengagement state from the engagement state while the clutch Clt is brought into the engagement state from the disengagement state. Then, the single planetary gear 30 is brought into the High state, thereby obtaining the HV driving mode at the second gear speed as illustrated in Fig. 6. In the single planetary gear 30, because of the smooth engagement and disengagement of the brake Brk and the clutch Clt, the speed change (i.e., the shifting between the Low state and the High state) without the cutoff of the driving force of the engine 11 is achieved. Further, the driving force of the electric motor 12 is transmitted to the drive wheels even while the single planetary gear 30 performs the speed change operation, thereby inhibiting the cutoff of the driving force in association with the speed change operation.

The control unit 13 of the hybrid vehicle 1 confirms the establishment of the second gear speed In the transmission 20 by receiving a signal output when the single planetary gear 30 is shifted to the High state. Then, once the establishment of the second gear speed is confirmed, the control unit 13 controls the engagement/disengagement state of each of the first and third synchronizer mechanisms 81 and 83 so that the driving force of the electric motor 12 is transmitted to the output shaft 42. Specifically, as illustrated by Pattern 8 in Fig. 4, the first synchronizer mechanism 81 brings the input shaft 41 and the third input gear 53 into the disconnected state while the third synchronizer mechanism 83 brings the output shaft 42 and the third output gear 63 into the connected state. Then, as illustrated in Fig. 7, the electric motor 12 transmits the driving force thereof to the output shaft 42 to thereby assist the driving of the engine 11 in the HV driving mode at the second gear speed.

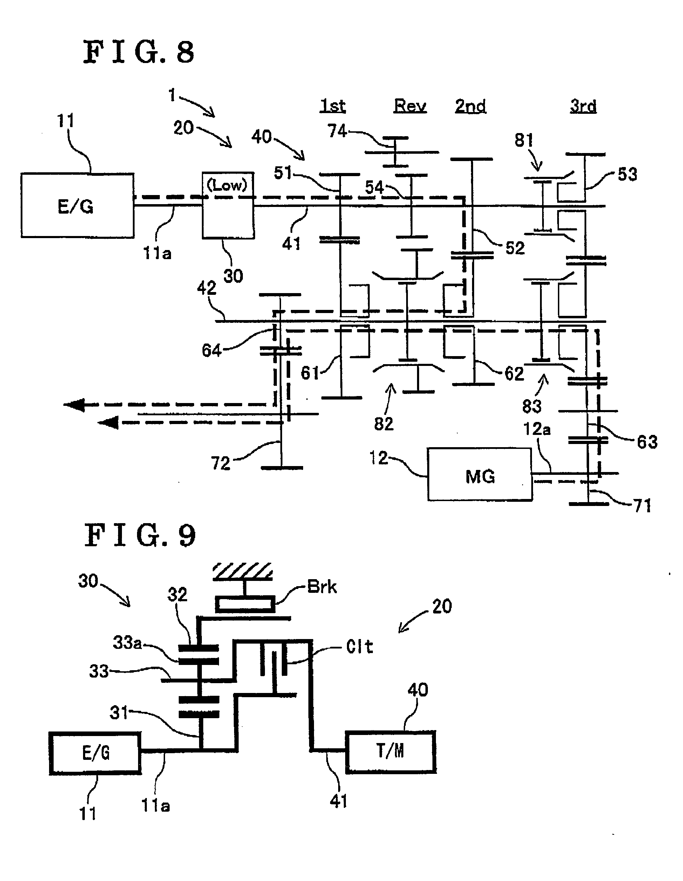

Next, in a case where the hybrid vehicle 1 is shifted from the second gear speed to the third gear speed, the brake Brk is brought into the engagement state from the disengagement state while the clutch Clt is brought into the disengagement state form the engagement state. Specifically, the single planetary gear 30 is brought into the Low state as illustrated by Pattern 9 in Fig. 4. in addition, the second synchronizer mechanism 82 brings the output shaft 42 and the first output gear 61 into the disconnected state and brings the output shaft 42 and the second output gear 62 into the connected state. Then, as illustrated in Fig. 8, the electric motor 12 transmits the driving force thereof to the output shaft 42 to thereby assist the driving of the engine 11 in the HV driving mode at the third gear speed.

According to the speed change operation involving the operation of the gear change mechanism 40, the transmission of the driving force of the engine 11 may be cut off or interrupted because of the synchronizer mechanisms 81 and 83 which bring the corresponding shafts 41 and 42, and the corresponding gears 53 and 63 into the connected state or the disconnected state. In addition, in a case where the driving force of the electric motor 12 is combined with the driving force of the engine 11 at the input shaft 41, the transmission of the driving force to the drive wheels is cut off. At this time, according to the transmission 20 of the present embodiment, the driving force of the electric motor 12 is transmitted to the output shaft 42 before the speed change operation involving the operation of the gear change mechanism 40 is performed. Accordingly, even when the transmission of the driving force of the engine 11 is interrupted, the driving force in the transmission 20 as a whole is transmittable to the drive wheels, thereby reducing the cutoff of the driving force. In the same way as the speed change from the first gear speed to the third gear speed, the cutoff of the driving force is also decreased in the speed change from the third gear speed to the sixth gear speed.

The transmission 20 of the hybrid vehicle 1 having the aforementioned configuration includes the single planetary gear 30 changing the rotational speed of the engine 11 to the two speeds (the Low speed and the High speed) by the operations of the first to third elements (i.e., the sun gear 31, the ring gear 32, and the carrier 33), and the gear change mechanism 40 having the plural gear sets. The single planetary gear 30 changes the rotational speed of the engine 11 by the engagement/disengagement state of each of the clutch Clt and the brake Brk. Thus, the single planetary gear 30 is switchable between one of the speeds to the other of the speeds without the cutoff of the driving force because of the smooth engagement/disengagement of the brake Brk and the clutch Cit. Thus, when the transmission 20 performs the gear change operation via the single planetary gear 30, the cutoff of the transmission of the driving force of the internal combustion engine (the engine 11) is avoidable.

The hybrid vehicle 1 is driven in a state where the rotational speed of the input shaft 41 is changed and then transmitted to the output shaft 42 by the gear change mechanism 40 to thereby change the rotational speed transmitted to the drive wheels from the engine 11. In the aforementioned driving of the hybrid vehicle 1, the transmission 20 brings the gears of the minimum reduction ratio gear set, i.e., the third input gear 53 and the third output gear 63 to selectively engage or disengage relative to the input shaft 41 and the output shaft 42 so that the driving force of the electric motor 12 is directly transmitted to the output shaft 42. Accordingly, the cut off of the driving force that may occur when the speed change operation is performed by the gear change mechanism 40 is reduced in the entire six forward speed change in the transmission 20.

The number of gear speeds of the transmission 20 is obtained by multiplying the number of gear speeds of the single planetary gear 30 with the number of gear speeds of the gear change mechanism 40. Thus, according to the transmission 20 of the present embodiment, a design flexibility of the gear ratio is improved. The engine 11, the electric motor 12, and the drive wheels are selectively connected and disconnected so that the start of the engine 11 and the assist of the driving force of the engine 11 by the electric motor 12, the driving and the regeneration of the electric motor 12 are effectively conducted. According to the transmission 20 of the present embodiment, the cutoff of the transmission of the driving force when the transmission 20 performs the gear change operation is reduced to thereby enhance a driving performance of the hybrid vehicle 1.

Further, according to the transmission 20 of the present embodiment, the switching between the first gear speed and the second gear speed is achieved by the switching of the speed change state of the single planetary gear 30 that is obtained by the smooth engagement and disengagement of each of the clutch Clt and the brake Brk. At this time, in the gears of the minimum reduction ratio gear set, the third input gear 53 is connected to the input shaft 41 by means of the first synchronizer mechanism 81 while the third output gear 63 is disconnected from the output shaft 42 by means of the third synchronizer mechanism 83. Therefore, the driving force of the electric motor 12 is transmitted to the output shaft 42 by means of the input shaft 41 and the first gear set (the first input gear 51 and the first output gear 61) at the first gear speed. As a result, the hybrid vehicle 1 appropriately starts moving at the first gear speed while the driving force (the rotational speed) of the electric motor 12 is reduced and transmitted to the drive wheels. Then, the gear speed is smoothly shifted to the second gear speed without the cutoff of the transmission of the driving force. Once the establishment of the second gear speed is confirmed, the driving force of the electric motor 12 is directly transmitted to the output shaft 42. Thus, the cutoff of the transmission of the driving force that may occur when the shifting to the third gear speed or greater is performed at the gear change mechanism 40 is securely reduced.

In the single planetary gear 30, the sun gear 31 is connected to the crankshaft 11a of the engine 11 to thereby serve as the first element while the ring gear 32 serves as the second element so that the rotation of the ring rear 32 is allowed or prohibited by the disengagement or engagement of the brake Brk. In addition, the carrier 33 serves as the third element so as to engage or disengage relative to the sun gear 31 by the engagement or disengagement of the clutch Cit. Accordingly, the speed change operation is achievable by the brake Brk and the clutch Clt, and the greater number of gear speeds are obtainable in combination with the gear change mechanism 40. In addition, the transmission 20 where the cutoff of the driving force is avoidable at the time of the speed change operation is obtained.

Further, according to the aforementioned configuration, in a case where the rotation of the ring gear 32 is restricted by the brake Brk while the hybrid vehicle 1 is driven in the HV driving mode, for example, the number of rotations of the electric motor 12 becomes smaller than the number of rotations of the engine 11 as illustrated in Fig. 2. Thus, the excessive rotation of the electric motor 12 is restrained. In addition, the gear ratio of the single planetary gear 30 is relatively large so that the plural gear speeds each having the appropriate gear ratio may be easily specified. The design flexibility of the gear ratio may be enhanced. Further, because the outer periphery of the clutch Clt is open, the clutch Clt is effectively cooled by air, thereby achieving a low-cost dry clutch relative to a wet clutch.

The minimum reduction ratio gear set (i.e., the third input gear 53 and the third output gear 63) among the three gear sets of the gear change mechanism 40 is arranged to be furthest away from the engine 11 in the direction of the input shaft 41 and is connected to the electric motor 12. Therefore, the engine 11 and the electric motor 12 each of which is a relatively large unit in the hybrid vehicle 1 are arranged to be away from each other. Thus, the mounting ability of the driving sources and the transmission 20 in the hybrid vehicle 1 is improved. In addition, according to the present embodiment, the three gear sets are arranged side by side in the axial direction of the gear change mechanism 40. Thus, as compared to a known hybrid vehicle including a gear change mechanism having six gear sets, a length in the axial direction is reduced. The transmission 20 as a whole is downsized in the hybrid vehicle 1 and the hybrid vehicle 1 equipped with the transmission 20 is light-weighted accordingly.

According to the aforementioned embodiment, the reverse gear train is provided so that the counter gear 74 is meshed with the gears (the reverse input gear 54 and the reverse output gear 64) of the reverse gear set supported by the input shaft 41 and the output shaft 42. Therefore, the transmission 20 controls the hybrid vehicle 1 to be driven rearward by the driving force output from the engine 11. Regardless of the remaining amount of battery power for operating the electric motor 12, for example, the vehicle is securely driven rearward.

The transmission 20 of the hybrid vehicle 1 is arranged so that the output shaft 42 is in parallel to the rotational shaft of the electric motor 12, and the electric motor 12 is arranged between the engine 11 and the minimum reduction ratio gear set (the third input gear 53 and the third output gear 63) in the axial direction. Thus, the axial length of the transmission 20 including the electric motor 12 is securely reduced. The mounting ability of the driving sources and the transmission 20 in the hybrid vehicle 1 is improved.

[Modification of First embodiment]
According to the aforementioned first embodiment, the single planetary gear 30 is configured so that the clutch Clt is arranged closer to the engine 11 relative to the gear change mechanism 40 in the axial direction as illustrated in Fig. 2. Alternatively, the clutch Clt may be arranged closer to the gear change mechanism 40 relative to the engine 11 in the axial direction as illustrated in Fig. 9. According to such configuration, effects same as those obtained by the first embodiment may be achieved because the sun gear 31 serves as the first element, the ring gear 32 serves as the second element, and the carrier 33 serves as the third element as in the same way as the first embodiment. The relationship of the sun gear 31, the ring gear 32, and the carrier 33 relative to the respective rotational speeds is thus the same as that illustrated in Fig. 3.

In the operation of the transmission 20, the hybrid vehicle 1 starts moving in a state where the engine 11 is stopped and thereafter the engine 11 is driven in the EV driving mode of the hybrid vehicle 1. Alternatively, the engine 11 may be started in a state where the hybrid vehicle 1 is stopped, i.e., before the hybrid vehicle 1 starts moving. Specifically, each member is controlled as illustrated by Pattern 2 in Fig. 4 so that the driving force of the electric motor 12 is transmitted to the crankshaft 11a. At this time, the driving force of the electric motor 12 is still transmittable even in a case where the engagement/disengagement states of the clutch Clt and the break Brk are exchanged, i.e., the clutch Clt is brought into the disengagement state while the brake Brk is brought into the engagement state. However, in a case where the rotation of the ring gear 32 is restricted by the break Brk as illustrated by the solid line in Fig. 3, the number of rotations of the crankshaft 11a becomes greater than the number of rotations of the input shaft 41. That is, a cranking may occur to thereby increase a load of the electric motor 12. Therefore, the clutch Clt is desirably brought into the engagement state so that the number of rotations of the input shaft 41 and the number of rotations of the crankshaft 11a are equal to each other.

Accordingly, in a case where the engine 11 is started before the hybrid vehicle 1 starts moving, the engagement/disengagement state of each of the first and third synchronizer mechanisms 81 and 83 may be controlled so that the driving force of the electric motor 12 is directly transmitted to the output shaft 42 at the time when the hybrid vehicle 1 starts moving. As a result, the number of meshed gears from the electric motor 12 to the drive wheels in the gear change mechanism 40 is reduced to thereby improve a transmission efficiency. However, in a case where the acceleration of the vehicle is required by the high driving force while the rotational speed of the electric motor 12 is reduced, the driving force of the electric motor 12 may be transmitted to the input shaft 41 where the driving force of the electric motor 12 is combined with the driving force of the engine 11.

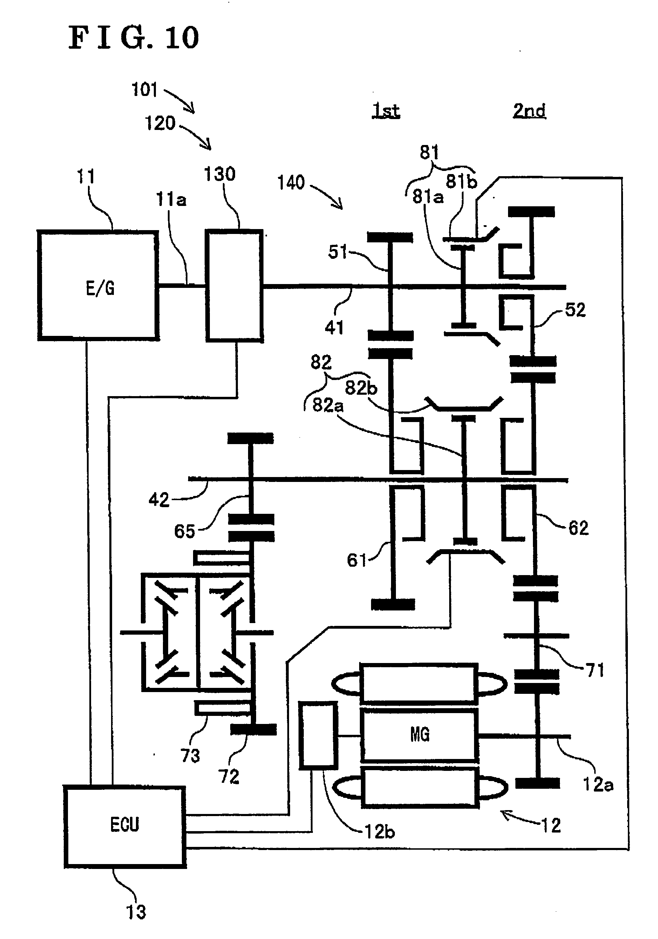

[Second embodiment]
A hybrid vehicle 101 and a transmission 210 according to a second embodiment will be explained with reference to Figs. 10 to 12. The second embodiment mainly differs from the first embodiment in the first to third elements of a single planetary gear 130 of the transmission 120, and the number of gear sets included in a gear change mechanism 140. The other configuration of the second embodiment is substantially the same as that of the first embodiment. Therefore, an explanation of the same configuration will be omitted and only the different configuration will be explained.

The hybrid vehicle 101 mainly includes the engine 11, the electric motor 12, the control unit 13, and the transmission 120. The transmission 120 transmits the driving force output from each of the engine 11 and the electric motor 12 serving as the driving source to the drive wheels based on the control signal from the control unit 13, for example. As illustrated in Fig. 10, the transmission 120 includes the single planetary gear 130 and the gear change mechanism 140. According to the present embodiment, a two-speed change is performed (i.e., two gear speeds are obtained) by the single planetary gear 130 while a two-speed change is performed (i.e., two gear speeds are achieved) by the gear change mechanism 140 so that a four forward speed change is performed (i.e.. four forward gear speeds are obtained) in total.

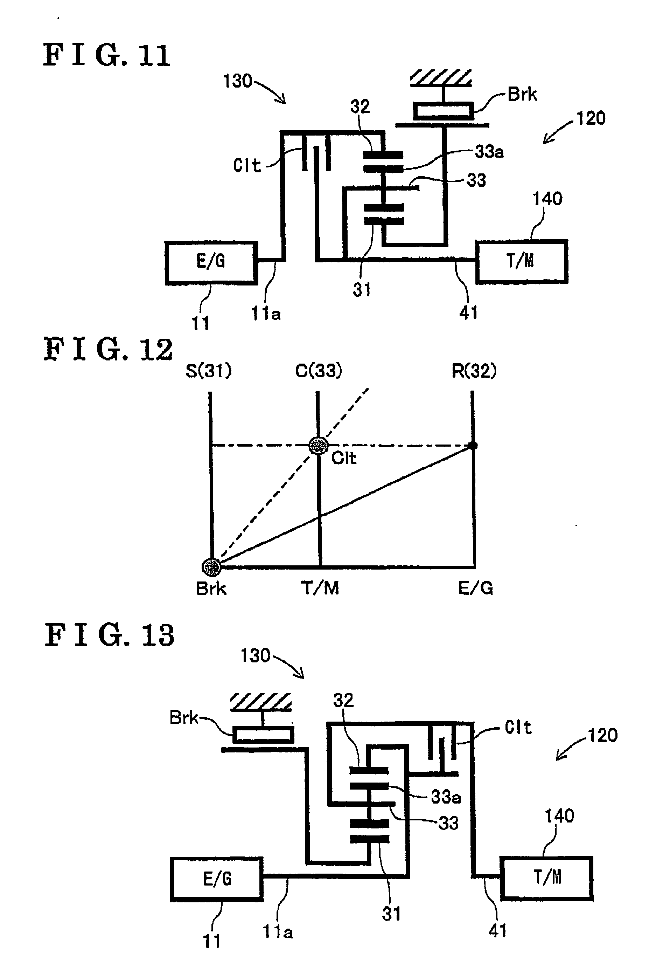

As illustrated in Fig. 11, the single planetary gear 130 has a planetary gear mechanism including the sun gear 31, the ring gear 32, and the carrier 33. According to the second embodiment, the rotation of the sun gear 31 is allowed or prohibited by the disengagement or engagement of the brake Brk. The sun gear 31 serves as the second element. The ring gear 32 is connected to the crankshaft 11a of the engine 11 so as to serve as the first element. The carrier 33 is connectable and disconnectable relative to the sun gear 31 serving as the first element based on the engagement and disengagement of the clutch Clt. The carrier 33 serves as the third element. The carrier 33 is connected to the input shaft 41 of the gear change mechanism 40.

According to the single planetary gear 130 having the aforementioned configuration, the rotational speed of the engine 11 is reduced and the resulting rotational speed is transmitted to the gear change mechanism 140 as illustrated by a solid line in Fig. 12. In a case where the brake Brk is brought into the disengagement state so as to allow the rotation of the sun gear 31 while the clutch Clt is brought into the engagement state so as to connect the ring gear 32 and the carrier 33 to each other, the driving force of the engine 11 is directly transmitted from the crankshaft 11a to the carrier 33. That is, as illustrated by a long dashed short dashed line in Fig. 12, the number of rotations (i.e., the rotational speed) of the engine 11 is fully transmitted to the gear change mechanism 140.

The gear change mechanism 140 includes the input shaft 41 connected to the carrier 33 serving as the third element of the single planetary gear 30, the output shaft 42 connected to the drive wheels of the hybrid vehicle 101, and plural gear sets changing the rotational speed of the input shaft 41 and transmitting the resulting rotational speed to the output shaft 42. According to the present embodiment, the gear change mechanism 140 includes two gear sets for transmitting the rotational speed of the input shaft 41 to the output shaft 42 at two forward gear speeds.

As illustrated in Fig. 10, the input gears 51 and 52 for the respective gear speeds are arranged axially along the input shaft 41. Specifically, the input gear for the first gear speed (i.e., the first input gear) 51 is integrally fixed to an outer peripheral surface of the input shaft 41. The input gear for the second gear speed (i.e., the second input gear) 52 is movably supported by the input shaft 41 via a bearing member such as a needle bearing. The second input gear 52 is engageable and disengageable relative to the input shaft 41 by means of the first synchronizer mechanism 81. As illustrated in Fig. 10, the first and second output gears 61 and 62, and the final output gear 65 are arranged axially along the output shaft 42. The first output gear 61 and the second output gear 62 are movably supported by the output shaft 42 via the bearing member such as the needle bearing. Each of the first and second output gears 61 and 62 is engageable and disengageable relative to the output shaft 42 by means of the second synchronizer mechanism 82.

The gear change mechanism 140 includes the two gear sets constituted by the first and second input gears 51 and 52, and the first and second output gears 61 and 62. The first and second input gears 51 and 52 are constantly meshed with the first and second output gears 61 and 62 respectively. At this time, the gear set constituted by the second input gear 52 and the second output gear 62 are arranged so as to be furthest away from the engine 11 in the axial direction of the input shaft 41. In addition, the aforementioned gear set is specified to be the minimum gear ratio in the gear change mechanism 140 and is the maximum gear speed (the second gear speed). Further, the second output gear 62 of the gear set is connected to the electric motor 12 via the intermediate gear 71. The gear set constituted by the second input gear 52 and the second output gear 62 for the second gear speed serves as the minimum reduction ratio gear set.

The gear change mechanism 140 includes the first synchronizer mechanism 81 provided at the input shaft 41 and the second synchronizer mechanism 82 provided at the output shaft 42. The first synchronizer mechanism 81 synchronizes the rotation of the input shaft 41 where the first synchronizer mechanism 81 is provided with the rotation of the second input gear 52 movably provided at the input shaft 41 to thereby connect the input shaft 41 to the second input gear 52. In addition, the second synchronizer mechanism 82 synchronizes the rotation of the output shaft 42 where the second synchronizer mechanism 82 is provided with the rotation of the first output gear 61 or the second output gear 62 movably provided at the output shaft 42 to thereby connect the output shaft 42 to the first output gear 61 or the second output gear 62. The first connection gear 81a of the first synchronizer mechanism 81 is selectively meshed with the synchronizer gear portion of the second input gear 52 while the first shift gear 81 b of the first synchronizer mechanism 81 is shifted in the axial direction of the input shaft 41. Because of such operation of the first synchronizer mechanism 81, the second input gear 52 is switchable between the connected state and the disconnected state relative to the input shaft 41. In the same way, the second synchronizer mechanism 82 is selectively connected to the first output gear 61 or the second output gear 62 while the second shift gear 82b of the second synchronizer mechanism 82 is shifted in the axial direction of the output shaft 42.

An operation of the transmission 120 in a case where the hybrid vehicle 101 is driven will be explained. According to the transmission 120 of the present embodiment, the single planetary gear 130 performs the two-speed change (i.e., Low and High speeds) while the gear change mechanism 140 performs the two-speed change (i.e., first and second gear speeds). As a result, the four forward speed change (the first to fourth gear speeds) as a whole is achievable.

The aforementioned four forward speed change is obtained on a basis of the engagement and disengagement of each of the brake Brk and the clutch Clt of the single planetary gear 130, and each of the synchronizer mechanisms 81 and 82 of the gear change mechanism 140. As compared to the first embodiment, the third gear set and the gear set for the reverse driving are not provided in the second embodiment. Thus, the speed change states represented by Patterns 1 to 4, 6 to 8, 11 and 12 in Fig. 4 are obtained in the second embodiment. In a case where the hybrid vehicle 101 performs the gear change operation from the first gear speed to the second gear speed, the operations of the single planetary gear 130 and the synchronizer mechanisms 81 and 82 controlled by the control unit are substantially the same as those of the first embodiment and thus the explanation is omitted.

According to the second embodiment, in a case where the hybrid vehicle 101 is driven rearward, the electric motor 12 rotates in an opposite direction (i.e., rotates reversely) from the direction in which the electric motor 12 rotates for the forward driving of the hybrid vehicle 101 to thereby transmit the rotation for the reverse driving (the reverse rotation) to the drive wheels. That is, by the control of the control unit 13, the first synchronizer mechanism 81 brings the second input gear 52 to be connected to the input shaft 41 while the second synchronizer mechanism 82 brings the first output gear 61 to be connected to the output shaft 42. At this time, the second output gear 62 is not connected to the output shaft 42 and is loosely or movably supported by the output shaft 42. In addition, at this time, the brake Brk and the clutch Clt of the single planetary gear 130 are both brought into the disengagement state so that the engine 11 is not connected to the input shaft 41. Then, in a case where the electric motor 12 rotates reversely, the driving force of the electric motor 12 is transmitted to the input shaft 41 via the second gear set for the second gear speed. The driving force, i.e., the rotational speed of the electric motor 12 is reduced by the first gear set for the first gear speed and the resulting reduced rotational speed is transmitted to the output shaft 42. Accordingly, the drive wheels rotate reversely so as to drive the vehicle rearward.

Alternatively, by the control of the control unit 13, the second synchronizer mechanism 82 brings the second output gear 62 to be connected to the output shaft 42. At this time, the second input gear 52 and the first output gear 61 are not connected to the input shaft 41 and the output shaft 42 respectively and are loosely or movably supported by the input shaft 41 and the output shaft 42. Then, when the electric motor 12 rotates reversely, the driving force of the electric motor 12 is directly transmitted to the output shaft 42. Accordingly, the drive wheels rotate reversely so as to drive the vehicle rearward.

According to the second embodiment, in the same way as the first embodiment, the hybrid vehicle 101 selectively achieves the various driving modes by the transmission 120. In addition, the driving force of the electric motor 12 is selectively combined with the driving force of the engine 11 at either the input shaft 41 or the output shaft 42. Further, the electric motor 12 is controlled by the control unit 13 so as to be brought into the driving state to generate the driving force and the regeneration state to generate the electric power by means of rotations transmitted from the drive wheels of the hybrid vehicle 101.

The transmission 120 of the hybrid vehicle 101 having the aforementioned configuration includes the gear change mechanism 140 constituted by the two gear sets. In addition, the electric motor 12 is connected to the gear set for the second gear speed arranged furthest away from the engine 11 in the gear change mechanism 140. Therefore, the engine 11 and the electric motor 12 each of which is a relatively large unit in the hybrid vehicle 101 are arranged to be away from each other. Thus, the mounting ability of the driving sources and the transmission 120 in the hybrid vehicle 101 is improved. In addition, according to the present embodiment, the two gear sets are arranged side by side in the axial direction of the gear change mechanism 140. Thus, as compared to a known hybrid vehicle including a gear change mechanism having six gear sets, for example, a length in the axial direction is reduced. The transmission 120 as a whole is downsized in the hybrid vehicle 101 and the hybrid vehicle 101 equipped with the transmission 120 is light-weighted accordingly.

In addition, in the same way as the transmission 20 of the first embodiment, the transmission 120 of the second embodiment is configured in such a manner that the electric motor 12 is connected to the minimum reduction ratio gear set specified to be the minimum gear ratio. Accordingly, the electric motor 12 is connected to the gear set for the maximum gear speed in the gear change mechanism 140. The speed of rotations output by the electric motor 12 is changed by any of the plural gear sets to thereby appropriately assist the driving of the engine 11. As a result, in addition to the downsizing of the transmission 120, an improvement of fuel, and a reduction of the number of shift changes upon driving of the hybrid vehicle 101 are achieved.

Further, the gear range for the reverse driving in the gear change mechanism 140 is achieved by the minimum reduction ratio gear set (the second input gear 52 and the second output gear 62) in association with the reverse rotation of the electric motor 12. Accordingly, the minimum reduction ratio gear set connected to the electric motor 12 is used for both the forward and rearward gear ranges. The hybrid vehicle 101 is driven rearward without the gear range (the gear set) for the reverse driving in the gear change mechanism 140. The number of components of the transmission 120 of the hybrid vehicle 101 as a whole is reduced accordingly.

[Modification of Second embodiment]
According to the second embodiment, the single planetary gear 130 is configured so that the clutch Clt is arranged closer to the engine 11 relative to the gear change mechanism 140 in the axial direction as illustrated in Fig. 11. Alternatively, the clutch Clt may be arranged closer to the gear change mechanism 40 relative to the engine 11 in the axial direction as illustrated in Fig. 13. According to such configuration, effects same as those obtained by the second embodiment may be achieved because the sun gear 31 serves as the second element, the ring gear 32 serves as the first element, and the carrier 33 serves as the third element as in the same way as the second embodiment. The relationship of the sun gear 31, the ring gear 32, and the carrier 33 relative to the respective rotational speeds is thus the same as that illustrated in Fig. 12.

According to the aforementioned first and second embodiments, in the transmission 20, 120 of the hybrid vehicle 1, 101, the switching from the first gear speed to the second gear speed is conducted by the single planetary gear 30, 130 so as to reduce the cutoff of the transmission of the driving force that may occur upon the shifting from the first gear speed to the second gear speed assuming that the hybrid vehicle 1 starts moving in the EV driving mode. On the other hand, in a case where the engine 11 is started before the start of the hybrid vehicle 1, 101 as in the modification of the first embodiment, for example, the cutoff of the transmission of the driving force is reduced even when the speed change operation is conducted by the gear change mechanism 40, 140 after the start of the engine 11. According to such structure, the switching from the first gear speed to the second gear speed may be conducted by the gear change mechanism 40, 140.

According to the aforementioned first and second embodiments, in order to reduce the cutoff of the transmission of the driving force assuming that the hybrid vehicle 1 starts moving in the EV driving mode, the timing when the driving force of the electric motor 12 is directly transmitted to the output shaft 42 is specified after the confirmation of the establishment of the second gear speed. Alternatively, the aforementioned timing may be appropriately changed and specified to be a timing when the start of the engine 11 is confirmed and the number of rotations (i.e., the rotational speed) of the engine 11 reaches a predetermined value, a timing when the vehicle speed reaches a predetermined value, or the like. However, because a time period from the establishment of the second gear speed to a request to the shifting to the third gear speed is uncertain, the aforementioned timing may be desirably specified when the establishment of the second gear speed is confirmed, in view of a securement of the driving force upon starting of the vehicle and the secure prevention of the cutoff of the driving force.

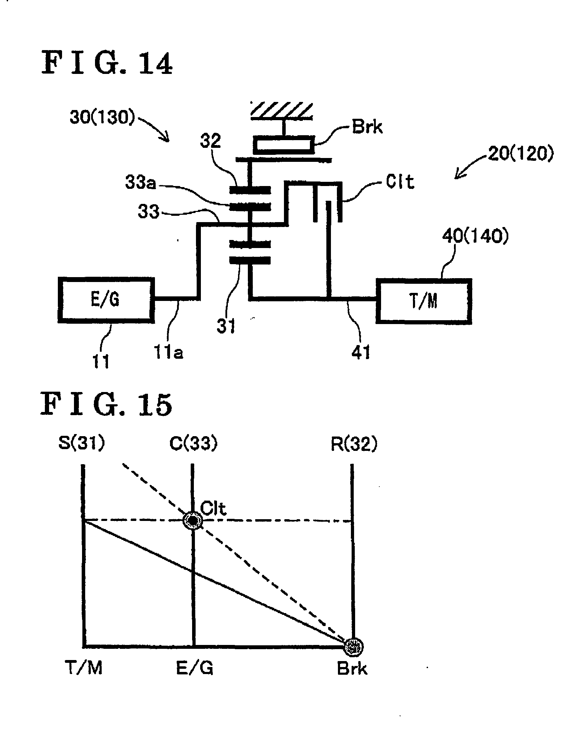

According to the aforementioned first embodiment, the sun gear 31, the ring gear 32, and the carrier 33 of the single planetary gear 30 serve as the first element, the second element, and the third element, respectively. In addition, according to the aforementioned second embodiment, the sun gear 31, the ring gear 32, and the carrier 33 of the single planetary gear 130 serve as the second element, the first element, and the third element. Alternatively, as illustrated in Fig. 14, the sun gear 31 may serve as the third element, the ring gear 32 may serve as the second element, and the carrier 33 may serve as the first element. According to the single planetary gear 30, 130 having such configuration, the rotational speed of the engine 11 increases and the resulting increased rotational speed is transmitted to the gear change mechanism 40, 140 connected to the sun gear 31 in a state where the rotation of the ring gear 32 is prohibited by the brake Brk as illustrated by a dashed line in Fig. 5.

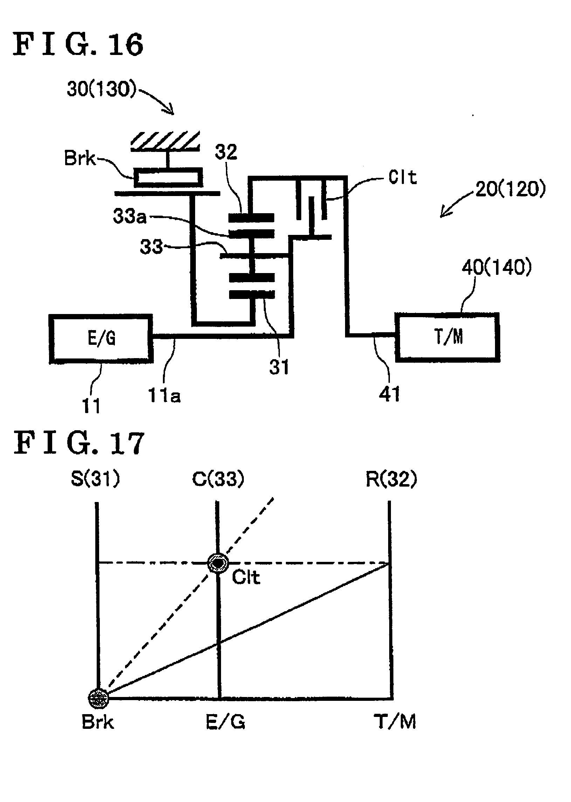

Further, as illustrated in Fig. 16, the sun gear 31 may serve as the second element, the ring gear 32 may serve as the third element, and the carrier 33 may serve as the first element. According to the single planetary gear 30, 130 having such configuration, the rotational speed of the engine 11 increases and the resulting increased rotational speed is transmitted to the gear change mechanism 40, 140 connected to the ring gear 32 in a state where the rotation of the sun gear 31 is prohibited by the brake Brk as illustrated by a dashed line in Fig. 17. Accordingly, the speed change operation is obtained with whichever of the members of the single planetary gear 30, 130 serve as the first element, the second element, or the third element. In a case where the brake Brk is brought into the disengagement state and the clutch Clt is brought into the engagement state, the driving force of the engine 11 is fully transmitted to the gear change mechanism 40, 140 (i.e., the same rotational speed is transmitted) as illustrated by a long dashed and short dashed line in Fig. 15 and Fig. 17. However, because the same rotational speed or the increased rotational speed of the engine 11 is transmitted to the gear change mechanism 40, 140 according to the aforementioned configuration, the single planetary gear 30, 130, having the configuration of each of the first and second embodiments is appropriate in view of a relationship with the gear change mechanism 40, 140 serving as a reducer.

According to the aforementioned first and second embodiments, the minimum reduction ratio gear set among the plural gear sets is arranged to be furthest away from the engine 11 in the axial direction of the input shaft 41. This is to improve the mounting ability of the driving sources and the transmission 20, 120 in the hybrid vehicle 1, 101 by the arrangement of the engine 11 and the electric motor 12, each of which is a relatively large unit in the hybrid vehicle 1, 101, to be away from each other. Alternatively, any of the gear sets except for the minimum reduction ratio gear get may be arranged to be furthest away from the engine 11 in the axial direction of the input shaft 41. According to such configuration, the reduction of the cutoff of the driving force when the speed change operation is conducted is achieved. Because the mounting position of each of the units in the vehicle is limited and a downsizing and/or a high mounting ability is required, the configuration according to each of the first and second embodiment is appropriate.

Further, the electric motor 12 is connected to the third output gear 63 of the gear change mechanism 40 or to the second output gear 62 of the gear change mechanism 140 via the intermediate gear 71 in the transmission 20, 120. That is, the electric motor 12 is connected to the output gear supported by the output shaft 42 among the gear set for the maximum gear speed. Alternatively, the electric motor 12 may be connected to the input gear supported by the input shaft 41 among the gear set for the maximum gear speed. As a result, even when the hybrid vehicle 1, 101 is driven at the maximum gear speed, the speed of the rotation output by the electric motor 12 is changed by the gear change mechanism 40, 140. However, at this time, the electric motor 12 is desirably connected to the output gear of the aforementioned gear set in view of the improvement of the gear efficiency when the vehicle is driven at the maximum gear speed.

Furthermore, according to the aforementioned first and second embodiments, the electric motor 12 is arranged between the engine 11 and the minimum reduction ratio gear set in the axial direction of the input shaft 41 in the transmission 20, 120 of the hybrid vehicle 1, 101. Alternatively, the transmission 20, 120 may be configured so that the electric motor 12 is arranged to be away from the engine 11 in the axial direction of the input shaft 41. According to such configuration, the same effect may be obtained by the operation of the transmission 20, 120. in view of the reduction of the axial length including the electric motor 12, however, the configuration of the first embodiment or the second embodiment is appropriate.
A transmission (20, 120) for a hybrid vehicle (1, 101) includes a single planetary gear (30, 130) including a first element (31, 32, 33) connected to an output shaft (11a) of an internal combustion engine (11), a second element (31, 32, 33) of which a rotation is allowed and prohibited by engagement and disengagement of a brake (Brk), and a third element (31, 32, 33) being connectable and disconnectable relative to the first element by engagement and disengagement of a clutch (Clt), and a gear change mechanism (40, 140) including an input shaft (41) connected to the third element, an output shaft (42) connected to drive wheels, and plural gear sets (51, 52, 53, 54, 61, 62, 63, 64) including a minimum reduction ratio gear set (53, 63/52, 62), one of gears (63/62) of the minimum reduction ratio gear set being connected to the electric motor.

## Claims

1. A transmission (20, 120) for a hybrid vehicle (1, 101) including an internal combustion engine (11) and an electric motor (12) each serving as a driving source, the transmission (20, 120) being **characterized by** comprising:
a single planetary gear (30, 130) including a first element (31, 32, 33) connectable to an output shaft (11a) of the internal combustion engine (11), a second element (31, 32, 33) of which a rotation is allowed and prohibited by engagement and disengagement of a brake (Brk), and a third element (31, 32, 33) being connectable and disconnectable relative to the first element (31, 32, 33) by engagement and disengagement of a clutch (Clt); and
a gear change mechanism (40, 140) including an input shaft (41) connected to the third element (31, 32, 33), an output shaft (42) connectable to drive wheels of the hybrid vehicle (1, 101), and plural gear sets (51, 52, 53, 54, 61, 62, 63, 64) configured to change a rotational speed of the input shaft (41) and to transmit the rotational speed to the output shaft (42), the plural gear sets (51, 52, 53, 54, 61, 62, 63, 64) including a minimum reduction ratio gear set (53, 63 or 52, 62) specified to be a minimum reduction gear ratio among the plural gear sets (51, 52, 53, 54, 61, 62, 63, 64), the minimum reduction ratio gear set (53, 63 or 52, 62) including gears (53, 63) supported by the Input shaft (41) and the output shaft (42) respectively so as to be engageable and disengageable, one of the gears (63 or 62) of the minimum reduction ratio gear set (53, 63 or 52, 62) being connectable to the electric motor (12).

2. The transmission (20, 120) according to claim 1, wherein the single planetary gear (30, 130) and the gear change mechanism (40, 140) establish a plurality of forward gear speeds, in which a switching from a first gear speed to a second gear speed is performed by a speed change operation of the single planetary gear (30, 130) based on the engagement and disengagement of each of the brake (Brk) and the clutch (Clt), and wherein the gears (53, 63 or 52, 62) of the minimum reduction ratio gear set (53, 63 or 52, 62) selectively engage and disengage relative to the input shaft (41) and the output shaft (42) so that a driving force of the electric motor (12) is transmitted to the output shaft (42) via the gear set for the first gear speed (51, 61) in a case where the hybrid vehicle is driven at the first gear speed, and so that the driving force of the electric motor (12) is transmitted to the output shaft (42) in a case where an establishment of the second gear speed is confirmed.

3. The transmission (20,120) according to either claim 1 or 2, wherein the first element is either one of a sun gear (39), a ring gear (32), and a carrier (33) of the single planetary gear (30, 130), the second element is either one of the sun gear (31) and the ring gear (32) not specified to be the first element, and the third element is either one of the sun gear (31), the ring gear (32), and the carrier (33) not specified to be the first element or the second element.

4. The transmission (20, 120) according to claim 3, wherein the first element is one of the sun gear (31) and the ring gear (32), the second element is the other of the sun gear (31) and the ring gear (32), and the third element is the carrier (33).

5. The transmission (20, 120) according to either claim 3 or 4, wherein the first element is the sun gear (31), the second element is the ring gear (32), and the third element is the carrier (33),

6. The transmission (20, 120) according to claim 5, wherein the clutch (Clt) is a dry clutch.

7. The transmission (20, 120) according to any one of claims 1 through 6, wherein the gear change mechanism (40, 140) includes two or three of the gear sets changing the rotational speed of the input shaft (41) to be transmitted to the output shaft (42) at two forward gear speeds or three forward gear speeds, the minimum reduction ratio gear set (53, 63 or 52, 62) in the two gear sets or the three gear sets is arranged to be furthest away from the internal combustion engine (11) in an axial direction of the input shaft (41).

8. The transmission (20) according to claim 7, wherein the plural gear sets (51, 52, 53, 54, 61, 62, 63, 64) include a gear set for a reverse driving having gears (54, 64), and a gear range for the reverse driving in the gear change mechanism is obtained by a gear train for the reverse driving in which the gears (54, 64) of the gear set for the reverse driving are supported by the input shaft (41) and the output shaft (42) respectively, and the gear set for the reverse driving is configured to be meshed with a counter gear (74), the gear train for the reverse driving being engageable and disengageable relative to at least one of the input shaft (41) and the output shaft (42).

9. The transmission (120) according to claim 7, wherein a reverse gear speed is obtained by a reverse rotation of the electric motor (12) and the minimum reduction ratio gear set (52, 62).

10. The transmission (20, 120) according to any one of claims 7 to 9, wherein the electric motor (12) can be arranged so that a rotational axis of the electrio motor (12) is parallel to the output shaft (42) of the gear change mechanism (40, 140) and can be arranged between the internal combustion engine (11) and the minimum reduction ratio gear set (53, 63 or 52, 62) in an axial direction of the output shaft (42).

## Patentansprüche

1. Getriebe (20, 120) für ein Hybridfahrzeug (1, 101) mit einer Brennkraftmaschine (11) und einem Elektromotor (12), wobei jedes als Antriebsquelle dient, wobei das Getriebe (20, 120) **gekennzeichnet ist durch** Aufweisen von:
einem einzelnen Planetengetriebe (30, 130) mit einem ersten Element (31, 32, 33), das mit einer Ausgangswelle (11a) der Brennkraftmaschine (11) verbindbar ist, einem zweiten Element (31, 32, 33), von dem eine Drehung **durch** Eingreifen und Lösen einer Bremse (Brk) zugelassen und verhindert wird, und einem dritten Element (31, 32, 33), das **durch** Eingreifen und Lösen einer Kupplung (Clt) relativ zu dem ersten Element (31, 32, 33) verbindbar und trennbar ist; und
einem Gangänderungsmechanismus (40, 140) mit einer Eingangswelle (41), die mit dem dritten Element (31, 32, 33) verbunden ist, einer Ausgangswelle (42), die mit den Antriebsrädern des Hybridfahrzeugs (1, 101) verbindbar ist, und einer Vielzahl von Zahnradsätzen (51, 52, 53, 54, 61, 62, 63, 64), die eingestellt sind, um eine Drehzahl der Eingangswelle (41) zu ändern und um eine Drehzahl zu der Ausgangswelle (42) zu übertragen, wobei die Vielzahl von Zahnradsätzen (51, 52, 53, 54, 61, 62, 63, 64) einen Zahnradsatz mit minimalem Untersetzungsverhältnis (53, 63 oder 52, 62) umfasst, der bestimmt ist, ein minimales Untersetzungsverhältnis unter der Vielzahl von Zahnradsätzen (51, 52, 53, 54, 61, 62, 63, 64) zu sein, wobei der Zahnradsatz mit minimalem Untersetzungsverhältnis (53, 63 oder 52, 62) Zahnräder (53, 63 oder 52, 62) umfasst, die jeweils von der Eingangswelle (41) und der Ausgangswelle (42) gehalten sind, so dass sie eingreifbar und lösbar sind, wobei eines der Zahnräder (63 oder 62) des Zahnradsatzes mit dem minimalen Untersetzungsverhältnis (53, 63 oder 52, 62) mit dem Elektromotor (12) verbindbar ist.

2. Getriebe (20, 120) nach Anspruch 1, wobei das einzelne Planetengetriebe (30, 130) und der Gangänderungsmechanismus (40, 140) eine Vielzahl von Vorwärtsgängen einrichten, in denen ein Schalten von einem ersten Gang in einen zweiten Gang durch einen Gangänderungsbetrieb des einzelnen Planetengetriebes (30, 130) auf der Grundlage des Eingreifens und Lösens jedes von der Bremse (Brk) und der Kupplung (Clt) durchgeführt wird, und wobei die Zahnräder (53, 63 oder 52, 62) des Zahnradsatzes mit minimalem Untersetzungsverhältnis (53, 63 oder 52, 62) relativ zu der Eingangswelle (41) und der Ausgangswelle (42) wahlweise so eingreifen und lösen, dass eine Antriebskraft des Elektromotors (12) zu der Ausgangswelle (42) über den Zahnradsatz des ersten Gangs (51, 61) übertragen wird, in einem Fall, wo das Hybridfahrzeug in einem ersten Gang angetrieben wird, und so, dass die Antriebskraft des Elektromotors (12) zu der Ausgangswelle (42) übertragen wird, in einem Fall, wo ein Einrichten des zweiten Gangs bestätigt ist.

3. Getriebe (20, 120) nach Anspruch 1 oder 2, wobei das erste Element eines von einem Sonnenrad (31), einem Hohlrad (32) und einem Träger (33) des einzelnen Planetengetriebes (30, 130) ist, das zweite Element eines von dem Sonnenrad (31) und dem Hohlrad (32) ist, das nicht bestimmt ist, das erste Element zu sein, und das dritte Element eines von dem Sonnenrad (31), dem Hohlrad (32) und dem Träger (33) ist, die nicht bestimmt sind, das erste Element oder das zweite Element zu sein.

4. Getriebe (20, 120) nach Anspruch 3, wobei das erste Element eines von dem Sonnenrad (31) und dem Hohlrad (32) ist, das zweite Element das andere von dem Sonnenrad (31) und dem Hohlrad (32) ist und das dritte Element der Träger (33) ist.

5. Getriebe (20, 120) nach Anspruch 3 oder 4, wobei das erste Element das Sonnenrad (31) ist, das zweite Elemente das Hohlrad (32) ist und das dritte Element der Träger (33) ist.

6. Getriebe (20, 120) nach Anspruch 5, wobei die Kupplung (Clt) eine Trockenkupplung ist.

7. Getriebe (20, 120) nach einem der Ansprüche 1 bis 6, wobei der Gangänderungsmechanismus (40, 140) zwei oder drei der Zahnradsätze umfasst, die die Drehzahl der Eingangswelle (41), die zu der Ausgangswelle (42) bei zwei Vorwärtsgängen oder drei Vorwärtsgängen übertragen werden soll, ändern, wobei der Zahnradsatz mit minimalem Untersetzungsverhältnis (53, 63 oder 52, 62) in den zwei Zahnradsätzen oder den drei Zahnradsätzen angeordnet ist, um am weitesten von der Brennkraftmaschine (11) in einer axialen Richtung der Eingangswelle (41) entfernt zu sein.

8. Getriebe (20) nach Anspruch 7, wobei die Vielzahl von Zahnradsätzen (51, 52, 53, 54, 61, 62, 63, 64) einen Zahnradsatz für ein Rückwärtsfahren mit Zahnrädern (54, 64) umfasst, und ein Gangbereich für das Rückwärtsfahren in dem Gangänderungsmechanismus durch einen Zahnradzug für das Rückwärtsfahren erhalten wird, in dem die Zahnräder (54, 64) des Zahnradsatzes für das Rückwärtsfahren entsprechend von der Eingangswelle (41) und der Ausgangswelle (42) gehalten werden, und der Zahnradsatz für das Rückwärtsfahren eingestellt ist, um mit einem Gegenzahnrad (74) zu kämmen, wobei der Zahnradzug für das Rückwärtsfahren relativ zu mindestens einer von der Eingangswelle (41) und der Ausgangswelle (42) eingreifbar und lösbar ist.

9. Getriebe (120) nach Anspruch 7, wobei ein Rückwärtsgang durch eine Rückwärtsdrehung des Elektromotors (12) und dem Zahnradsatz mit minimalem Untersetzungsverhältnis (52, 62) erhalten wird.

10. Getriebe (20, 120) nach einem der Ansprüche 7 bis 9, wobei der Elektromotor (12) so angeordnet werden kann, dass eine Drehachse des Elektromotors (12) parallel zu der Ausgangswelle (42) des Gangänderungsmechanismus (40, 140) ist, und zwischen der Brennkraftmaschine (11) und dem Zahnradsatz mit minimalem Untersetzungsverhältnis (53, 63 oder 52, 62) in einer axialen Richtung der Ausgangswelle (42) angeordnet werden kann.

## Revendications

1. Transmission (20, 120) pour un véhicule hybride (1, 101) comprenant un moteur à combustion interne (11) et un moteur électrique (12), servant chacun de source d'entraînement, la transmission (20, 120) étant **caractérisée en ce qu'**elle comprend :
un engrenage planétaire unique (30, 130) comprenant un premier élément (31, 32, 33) pouvant être raccordé à un arbre de sortie (11a) du moteur à combustion interne (11), un deuxième élément (31, 32, 33) dont une rotation est autorisée et interdite par mise en prise et dégagement d'un frein (Brk) et un troisième élément (31, 32, 33) pouvant être raccordé et déconnecté par rapport au premier élément (31, 32, 33) par mise en prise et dégagement d'un embrayage (Clt) ; et
un mécanisme de changement de vitesse (40, 140) comprenant un arbre d'entrée (41) raccordé au troisième élément (31, 32, 33), un arbre de sortie (42) pouvant être raccordé aux roues motrices du véhicule hybride (1, 101), et une pluralité de trains d'engrenages (51, 52, 53, 54, 61, 62, 63, 64) configurés pour changer une vitesse de rotation de l'arbre d'entrée (41) et pour transmettre la vitesse de rotation à l'arbre de sortie (42), la pluralité de trains d'engrenages (51, 52, 53, 54, 61, 62, 63, 64) comprenant un train d'engrenages à rapport de réduction minimum (53, 63 ou 52, 62) spécifié pour être un engrenage à rapport de réduction minimum parmi la pluralité de trains d'engrenages (51, 52, 53, 54, 61, 62, 63, 64), le train d'engrenages à rapport de réduction minimum (53, 63 ou 52, 62) comprenant des engrenages (53, 63 ou 52, 62) supportés par l'arbre d'entrée (41) et l'arbre de sortie (42) respectivement afin de pouvoir être mis en prise et pouvoir être dégagés, l'un des engrenages (63 ou 62) du train d'engrenages à rapport de réduction minimum (53, 63 ou 52, 62) pouvant être raccordé au moteur électrique (12).

2. Transmission (20, 120) selon la revendication 1, dans laquelle l'engrenage planétaire unique (30, 130) et le mécanisme de changement de vitesse (40, 140) établissent une pluralité de vitesses en marche avant, dans laquelle un passage de la première vitesse à une seconde vitesse est réalisé par une opération de changement de vitesse de l'engrenage planétaire unique (30, 130), basée sur la mise en prise et le dégagement de chacun parmi le frein (Brk) et l'engrenage (Clt), et dans laquelle les engrenages (53, 63 ou 52, 62) du train d'engrenages à rapport de réduction minimum (53, 63 ou 52, 62) se mettent en prise et se dégagent sélectivement par rapport à l'arbre d'entre (41) et l'arbre de sortie (42) de sorte qu'une force d'entraînement du moteur électrique (12) est transmise à l'arbre de sortie (42) via le train d'engrenages pour la première vitesse (51, 61) dans le cas dans lequel le véhicule hybride est entraîné à la première vitesse, et de sorte que la force d'entraînement du moteur électrique (12) est transmise à l'arbre de sortie (42) dans le cas dans lequel un établissement de la seconde vitesse est confirmé.

3. Transmission (20, 120) selon la revendication 1 ou 2, dans laquelle le premier élément est l'un parmi un planétaire (31), une couronne dentée (32) et un porte-planétaire (33) de l'engrenage planétaire unique (30, 130), le deuxième élément est l'un parmi le planétaire (31) et la couronne dentée (32) non spécifiée comme étant le premier élément, et le troisième élément est l'un parmi le planétaire (31), la couronne dentée (32) et le porte-planétaire (33) non spécifié comme étant le premier élément ou le deuxième élément.

4. Transmission (20, 120) selon la revendication 3, dans laquelle le premier élément est l'un parmi le planétaire (31) et la couronne dentée (32), le deuxième élément est l'autre parmi le planétaire (31) et la couronne dentée (32), et le troisième élément est le porte-planétaire (33).

5. Transmission (20, 120) selon la revendication 3 ou 4, dans laquelle le premier élément est le planétaire (31), le deuxième élément est la couronne dentée (32), et le troisième élément est le porte-planétaire (33).

6. Transmission (20, 120) selon la revendication 5, dans laquelle l'embrayage (Clt) est un embrayage à sec.

7. Transmission (20, 120) selon l'une quelconque des revendications 1 à 6, dans laquelle le mécanisme de changement de vitesse (40, 140) comprend deux ou trois trains d'engrenages changeant la vitesse de rotation de l'arbre d'entrée (41) à transmettre à l'arbre de sortie (42) à deux vitesses de marche avant ou trois vitesses de marche avant, le train d'engrenages à rapport de réduction minimum (53, 63 ou 52, 62) dans les deux trains d'engrenages ou les trois trains d'engrenages est agencé pour être le plus éloigné du moteur à combustion interne (11) dans une direction axiale de l'arbre d'entrée (41).

8. Transmission (20) selon la revendication 7, dans laquelle la pluralité de trains d'engrenages (51, 52, 53, 54, 61, 62, 63, 64) comprend un train d'engrenages pour une marche arrière ayant des engrenages (54, 64) et une plage d'engrenages pour la marche arrière dans le mécanisme de changement de vitesse est obtenue par un train d'engrenages pour la marche arrière dans lequel les engrenages (54, 64) du train d'engrenages pour la marche arrière sont supportés par l'arbre d'entrée (41) et l'arbre de sortie (42) respectivement, et le train d'engrenages pour la marche arrière est configuré pour être engrené avec un contre-engrenage (74), le train d'engrenages pour la marche arrière pouvant être mis en prise et dégagé par rapport à au moins l'un parmi l'arbre d'entrée (41) et l'arbre de sortie (42).

9. Transmission (120) selon la revendication 7, dans laquelle la vitesse de marche arrière est obtenue par rotation inverse du moteur électrique (12) et le train d'engrenages a un rapport de réduction minimum (52, 62).

10. Transmission (20, 120) selon l'une quelconque des revendications 7 à 9, dans laquelle le moteur électrique (12) peut être agencé de sorte qu'un axe de rotation du moteur électrique (12) est parallèle à l'arbre de sortie (42) du mécanisme de changement de vitesse (40, 140) et peut être agencé entre le moteur à combustion interne (11) et le train d'engrenages à rapport de réduction minimum (53, 63 ou 52, 62) dans une direction axiale de l'arbre de sortie (42).
